# EUROPÄISCHE PATENTANMELDUNG

(11) **EP 1 852 396 A1**
(43) Veröffentlichungstag der Anmeldung: **07.11.2007**
(21) Anmeldenummer: 07006808.5
(22) Anmeldetag: 02.04.2007
(51) Int. Cl.: C02F 1/00, B01D 29/01, B01D 29/94

(54) **Trennvorrichtung zur Trennung von Feststoffen aus Abwasser**

(30) Priorität: 05.05.2006 AT 7772006
(71) Anmelder: Forstner, Maximilian, 6971 Hard (AT)
(72) Erfinder: Schuchter, Günter, 6780 Schruns (AT)
(74) Vertreter: Hofmann, Ralf U.

(57) **Zusammenfassung**

Trennvorrichtung zur Trennung von Feststoffen aus Abwasser mit einem Trenngehäuse (2) mit einer Zuführungsleitung (3) zur Zufuhr des mit den Feststoffen befrachteten Abwassers, einer ersten Abführungsleitung (4) zur Abführung des von den Feststoffen gereinigten Abwassers, einer zweiten Abführungsleitung (5) zur Abführung der abgetrennten Feststoffe und einem im Trenngehäuse (2) angeordneten Rechen (6) zur Abtrennung der Feststoffe aus dem Abwasser. Der Rechen (6) ist geneigt angeordnet und erstreckt sich über die Eintrittsöffnung (40) der ersten Abführungsleitung (4). Die Zufuhr des Abwassers erfolgt auf die Oberseite des Rechens (6). Über die Oberseite des Rechens (6) abgleitende Feststoffe gelangen von dessen unterem Rand in die Eintrittsöffnung (50) der zweiten Abführungsleitung (5). Die zweite Abführungsleitung (5) geht vertikal verlaufend vom Trenngehäuse (2) aus und über die Oberfläche des Rechens (6) abgeleitete Feststoffe fallen von dessen unterem Rand in die Eintrittsöffnung (50) der zweiten Abführungsleitung (5) und der vertikale Verlauf der zweiten Abführungsleitung (5) setzt sich zumindest bis zu einer in die zweite Abführungsleitung (5) mündenden Spülleitung fort.

## Beschreibung

Die Erfindung betrifft eine Trennvorrichtung zur Trennung von Feststoffen aus Abwasser mit einem Trenngehäuse mit einer Zuführungsleitung zur Zufuhr des mit den Feststoffen befrachteten Abwassers, einer ersten Abführungsleitung zur Abführung des von den Feststoffen gereinigten Abwassers, einer zweiten Abführungsleitung zur Abführung der abgetrennten Feststoffe und einem im Trenngehäuse angeordneten Rechen zur Abtrennung der Feststoffe aus dem Abwasser, der geneigt angeordnet ist und sich über die Eintrittsöffnung der ersten Abführungsleitung erstreckt und auf dessen Oberseite die Zufuhr des Abwassers erfolgt, wobei über die Oberseite des Rechens abgleitende Feststoffe von dessen unterem Rand in die zweite Abführungsleitung gelangen.

In der DD 248 997 A1 wird eine Einrichtung zum Abtrennen von Grobstoffen aus Flüssigkeiten mit einem Rechenschacht und einem Schachtrechen beschrieben, die vorzugsweise in der Abwasserbehandlung eingesetzt wird. Nachteilig bei der bekannten Einrichtung ist die aufwendige Ausbildung des Rechens als Spiralrechen, der aus einem über Abstandshaltern gewickelten Flachband besteht. Weiters ist es nachteilig, dass die abzutrennenden Feststoffe immer dann, wenn eine große Menge Abwassers in das Trenngehäuse einströmt, von unten gegen den Spiralrechen gedrückt werden und in der Folge leicht festgesetzt werden können. Im Ergebnis kommt es dadurch im schwer zugänglichen Mündungsbereich der Abführungsleitung zur Abführung der Feststoffe, der durch den Spiralrechen vom oberhalb dieses Mündungsbereiches befindlichen Grauwasserbereich des Trenngehäuses getrennt ist, leicht zur Verstopfung mit Feststoffen. Eine Entfernung von festgesetzten Feststoffen aus diesem Mündungsbereich ist somit nur unter großem Aufwand möglich. Auch die Reinigung der Windungen des Spiralrechens ist verhältnismäßig aufwendig. Zur Reinigung ist es nämlich erforderlich, dass der Rechen als Ganzes versetzt und seine Windungen nach einem Zeitprogramm mit Wasser gespült werden.

Eine Trennvorrichtung der eingangs genannten Art ist aus der WO99/45214 A1 bekannt. In einer in dieser Schrift beschriebenen Ausführungsform ist nach dem Schmutzwasserzulauf ein rinnenförmig gebogener Rechen mit parallel zur Strömungsrichtung verlaufenden Stäben geneigt angeordnet, der Feststoffe zu einer eigenen Abführung leitet, das Wasser jedoch nach unten durchlässt. Bei dieser Einrichtung sollen im Fall von großen Wassermengen bei Unwettern mitgeführte größere Feststoffe zu einer anderen Abführung geleitet werden, als dies für kleinere Feststoffe bei einer normalen Wasserführung der Fall ist. Hierbei wird jedoch auch zumindest ein Teil des zugeführten Wassers in diese für die gröberen Feststoffe dienende Leitung geleitet, was auch für eine Abführung der gröberen Feststoffe erforderlich ist. Auch erscheint diese Einrichtung zum Einsatz für Haushalts- oder Industrieabwässer nicht als geeignet.

Aufgabe der Erfindung ist es, eine Trennvorrichtung der eingangs genannten Art bereitzustellen, die einfach ausgebildet ist und mit wenigen Teilen eine wirksame Trennung von Feststoffen aus Abwasser ermöglicht. Erfindungsgemäß gelingt dies durch eine Trennvorrichtung mit den Merkmalen des Anspruchs 1.

Erfindungsgemäß wird das Abwasser von der Zuführungsleitung auf die Oberseite des Rechens geleitet, welcher gegen die Vertikale und gegen die Horizontale geneigt im Trenngehäuse angeordnet ist, wobei er die erste Abführungsleitung des Trenngehäuses überragt. Wenn in dieser Beschreibung von einer "Neigung" oder einem "geneigten Rechen", einem "geneigten Rohr", einer "geneigten" Oberfläche, von "geneigten" Stäben usw. die Rede ist, so ist darunter grundsätzlich zu verstehen, dass der von der Horizontalebene und dem geneigten Gegenstand eingeschlossene spitze Neigungswinkel mehr als 0° und weniger als 90° beträgt. Die Neigung des Rechens muss jedenfalls so bemessen sein, dass die zugeführten Feststoffe an seiner Oberseite abgleiten. Über die Oberseite des Rechens abgleitende und somit abgeleitete Feststoffe fallen von dessen unterem Rand in die Eintrittsöffnung der zweiten Abführungsleitung. Durch die geneigte, sich über die Eintrittsöffnung der ersten Abführungsleitung erstreckende Ausbildung des Rechens und die Zufuhr des mit Feststoffen befrachteten Abwassers auf seine geneigte Oberseite gelingt es, das Abwasser von den Feststoffen weitgehend zu trennen und das Grauwasser d.h. das von den Feststoffen gereinigte Abwasser zur Abführung in die erste Abführungsleitung und die abgetrennten Feststoffe zur Abführung in die zweite Abführungsleitung zu leiten. Die zweite Abführungsleitung geht hierbei vertikal verlaufend vom Trenngehäuse aus, wobei sich dieser vertikale Verlauf zumindest bis zu einer in die zweite Abführungsleitung mündenden Spülleitung fortsetzt.

Es ist vorteilhaft, wenn auch das Trenngehäuse gegen die Vertikale und gegen die Horizontalebene geneigt ist, wobei es vorzugsweise als Rohr ausgebildet ist und wobei sowohl die Neigung des Trennrohres als auch die Neigung des Rechens im Trennrohr einen Neigungswinkel von ca. 25° nicht unterschreitet.

Vorteilhafterweise weist der Rechen mehrere beabstandet miteinander verbundene parallele Stäbe auf, die zu einem Bereich im Trenngehäuse hin gerichtet sind, der sich bezogen auf die Vertikale oberhalb der Eintrittsöffnung der zweiten Abführungsleitung befindet. Dabei ist es bevorzugt, wenn die der zweiten Abführungsleitung näheren Endabschnitte einer Mehrzahl von Stäben des Rechens frei ragend ausgebildet sind.

Weitere Vorteile und Einzelheiten der Erfindung werden im Folgenden anhand der beiliegenden Zeichnung erläutert. In dieser zeigen:
Fig. 1 eine schematische Seitenansicht einer Ausführungsform einer erfindungsgemäßen Trennvorrichtung mit einem Trennrohr und einer an dessen oberen Ende angemufften Zuführungsleitung und einem geneigten (sichtbar gezeichneten) Stabrechen;
Fig. 2 einen Querschnitt durch die Trennvorrichtung aus Fig. 1 entlang der Schnittlinie A-A aus Fig. 1.

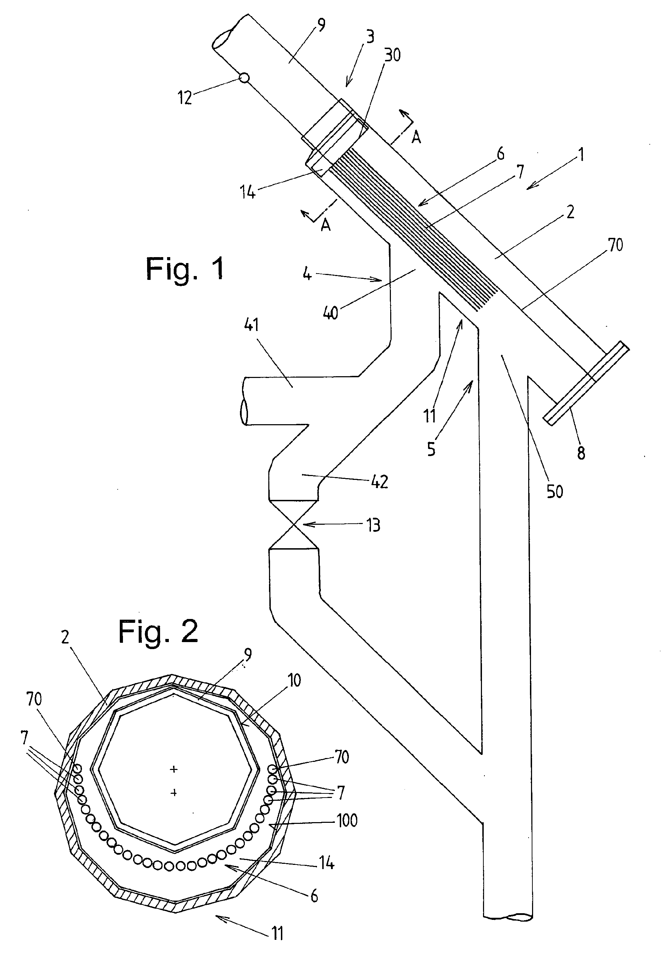

Eine Ausführungsform einer erfindungsgemäßen Trennvorrichtung zur Trennung von Feststoffen aus Abwasser ist in den Fig. 1 und 2 dargestellt.

Die Trennvorrichtung 1 weist ein Trenngehäuse 2 auf. Das Trenngehäuse 2 ist im Ausführungsbeispiel als ein geneigtes Rohr ausgebildet (Trennrohr). Es weist einen zwölfeckigen Querschnitt auf. Das Trenngehäuse 2 könnte auch rund oder mit einer anderen Querschnittskontur ausgebildet sein. Es könnte beispielsweise auch als im Wesentlichen rechteckige Einhausung ausgebildet sein. Im Trenngehäuse 2 erfolgt die Trennung der Feststoffe aus dem Abwasser.

Das Trenngehäuse 2 umfasst eine Zuführungsleitung 3. Sie ist im Ausführungsbeispiel als ein Endabschnitt eines in das Trenngehäuse hineinragenden Zuflussrohres 9 ausgebildet, welches exzentrisch am oberen Ende des Trennrohres mittels einer Steckmuffe angemufft ist. Die Längsmittelachse der Zuführungsleitung 3 ist gegenüber der Längsmittelachse des Trenngehäuses 2 nach oben verschoben. Die Mündung 30 der Zuführungsleitung 3 befindet sich im Bereich des oberen Endes des Rechens 6. Die Zuführungsleitung 3 weist hier einen achteckigen Querschnitt auf, sie könnte auch mit einem anderen Querschnitt, beispielsweise kreisrund oder elliptisch, ausgebildet sein. Die Zuführungsleitung 3 dient der Zufuhr des mit den Feststoffen befrachteten Abwassers in das Trenngehäuse 2. Sie ragt im Ausführungsbeispiel in das Trenngehäuse 2 hinein.

Weiters ist eine erste Abführungsleitung 4 am Trenngehäuse 2 vorhanden. Über die Abführungsleitung 4 wird das Grauwasser d.h. das von den Feststoffen gereinigte Abwasser aus dem Trenngehäuse 2 abgeführt.

Zur Abführung der abgetrennten Feststoffe umfasst das Trenngehäuse 2 eine zweite Abführungsleitung 5. Über die Oberseite des Rechens 6 abgleitende Feststoffe fallen von dessen unterem Rand in die Eintrittsöffnung 50 dieser zweiten Abführungsleitung 5. Auf diese Weise wird die Trennung der Feststoffe aus dem Abwasser erreicht.

Im Trenngehäuse 2 und unterhalb der Zuführungsleitung 3 ist der geneigte Rechen 6 mit parallelen, die erste Abführungsleitung 4 überragenden Stäben 7 angeordnet. Die Neigung d.h. der spitze Winkel α zwischen den Stäben 7 und der Horizontalebene liegt betragsmäßig vorzugsweise zwischen 25° und 75°, wobei ein Wert zwischen 35° und 60° besonders bevorzugt ist. Im gezeigten Ausführungsbeispiel beträgt der Neigungswinkel α ca. 45°.

Die Stäbe 7 sind zu einem Bereich im Trenngehäuse 2 hin gerichtet, der sich bezogen auf die Vertikale unmittelbar über der Eintrittsöffnung 50 der zweiten Abführungsleitung 5 befindet.

Der Rechen 6 trennt die Feststoffe aus dem Abwasser, indem er das Grauwasser zwischen seinen Stäben 7 und durch die erste Abführungsleitung 4 hindurch aus dem Trenngehäuse2 ausströmen lässt, die Feststoffe jedoch mit seinen äquidistant beabstandeten Stäben 7 daran hindert, in die erste Abführungsleitung 4 einzutreten. Durch die parallelen beabstandeten Stäbe 7 wird eine einfache und zuverlässige Abführung der Feststoffe über den unteren Rand des Rechens 6 und durch die zweite Abführungsleitung 5 erreicht. Die der zweiten Abführungsleitung 5 näheren Endabschnitte der Stäbe 7 sind frei ragend ausgebildet (mit Ausnahme der weiter unten beschriebenen am Verschluss 8 befestigten Stäbe 70). Dadurch und auch durch die Ausrichtung der Stäbe 7 zur Eintrittsöffnung 50 der zweiten Abführungsleitung 5 hin wird ein Hängenbleiben von Haaren und Flusen etc. im Rechen 6 wirksam vermieden und die Abführung der Feststoffe erleichtert.

Im Ausführungsbeispiel sind die Stäbe 7 bezogen auf den Trenngehäuse-Querschnitt entlang der Querschnittskontur einer Rinne (konkav nach oben) angeordnet. Sie könnten auch entlang einer anderen Linie, beispielsweise entlang einer Geraden, angeordnet sein. Der Rechen 6 müsste in diesem Fall aber bis nahe an die seitlichen Wände des Trenngehäuses 2 herangeführt sein. Die Stäbe 70 könnten in diesem Fall in einem Abstand von den Seitenwänden des Trenngehäuses 2 angeordnet sein, der beispielsweise etwa die Hälfte des Normalabstandes zweier Stäbe 7 beträgt.

Die Stäbe 7 weisen einen kreisrunden Querschnitt auf. Sie könnten auch einen anderen Querschnitt aufweisen, beispielsweise einen elliptischen oder einen rechteckigen. Die oberen Endabschnitte einiger Stäbe 7 befinden sich im Ausführungsbeispiel oberhalb des tiefsten Punktes der Mündung 30 der Zuführungsleitung 3. Es ist jedoch auch eine Ausbildung denkbar und möglich bei der die Mündung 30 (gänzlich) oberhalb des Rechens 6 liegt. Da der Rechen 6 von den miteinander verbundenen Stäben 7 gebildet wird, wird die Richtung des Gefälles des Rechens 6 von der räumlichen Anordnung der Stäbe 7 bedingt, deren Längserstreckung parallel zur Gefällerichtung des Rechens liegt.

Die der Zuführungsleitung 3 näheren Endabschnitte der Stäbe 7 sind miteinander beabstandet verbunden. Im Ausführungsbeispiel sind sie fest mit einem Halteteil 14 verbunden und von diesem gehalten. Das Halteteil 14 ist auf die Außenwandung 10 der Zuführungsleitung 3 in Umfangsrichtung formschlüssig aufgesteckt und somit lösbar mit dieser verbunden ist. Das gezeigte Halteteil 14 (s. Fig. 2) weist eine äußere Umfangskontur auf, die der Innenquerschnittskontur des Trenngehäuses 2 angepasst ist. Mit anderen Worten das Halteteil 14 ist zwischen der Außenwandung 10 der Zuführungsleitung 3 und der Innenwandung 100 des Trenngehäuses 2 eingesteckt. Das Halteteil 14 ist somit gegen axiale Verdrehung durch Formschluss mit der Außenwandung 10 der Zuführungsleitung 3 einerseits und der Innenwandung 100 des Trenngehäuses 2 andererseits gesichert.

Das Trenngehäuse 2 weist einen öffenbaren Verschluss 8 auf. Im Ausführungsbeispiel ist der Verschluss 8 mit zwei bis zum Verschluss 8 hin verlängerten Stäben 70 des Rechens 6 verbunden. Er ist an einem unteren Endflansch des Trenngehäuses 2 angeschraubt (Schrauben in der Zeichnung nicht eingezeichnet). Auf diese Weise tragen der Verschluss 8 und die verlängerten Stäbe 70 dazu bei, dass der Rechen 6 im Trenngehäuse 2, insbesondere in Gefällerichtung der Stäbe 70, in Position gehalten wird. Der Verschluss 8 dient auch zur Reinigung und/oder Wartung der Trennvorrichtung 1, insbesondere kann die aus dem Verschluss 8 und aus dem mit Hilfe der Stäbe 70 von diesem gehaltenen Rechen 6 gebildete Einheit als Ganzes einfach in das Trenngehäuse 2 hinein bzw. aus diesem wieder heraus gebracht werden.

Die erste Abführungsleitung 4 und die zweite Abführungsleitung 5 sind im Ausführungsbeispiel an der einheitlich geneigten rinnenförmigen Unterseite 11 des Trenngehäuses 2 (Trennrohres) angeordnet. Es ist jedoch auch denkbar und möglich, dass die Unterseite 11 des Trenngehäuses 2 zumindest teilweise von teiloffenen Hohlkörpern gebildet wird, die beispielsweise die Form von nach unten sich verjüngenden Kegelstümpfen (Trichter) aufweisen, welche in die erste Abführungsleitung 4 und in die zweite Abführungsleitung 5 übergehen.

In der Zuführungsleitung 3 ist im Ausführungsbeispiel ein Temperatursensor 12 zur Erfassung der Abwassertemperatur angeordnet. Dieser Temperatursensor 12 öffnet und/oder schließt ein Abflusssperrventil 13 in Abhängigkeit von der Abwassertemperatur. Im Ausführungsbeispiel weist die erste Abführungsleitung 4 eine Gabelung in einen ersten Zweig 41 und in einen zweiten Zweig 42 auf. Das Abflusssperrventil 13 ist hier im zweiten Zweig 42 angeordnet. Der erste Zweig 41 führt im Ausführungsbeispiel zu einer Wärmerückgewinnungsanlage (nicht eingezeichnet) und der zweite Zweig 42 führt zur zweiten Abführungsleitung 5. Die Öffnungs- bzw. Schließtemperatur sind einstellbar. Wenn Abwasser mit einer Temperatur, die höher als die eingestellte Öffnungstemperatur ist, den Temperatursensor 12 passiert, so veranlasst der Temperatursensor 12 im Ausführungsbeispiel die Schließung des Abflusssperrventils 13. Auf diese Weise wird ein genügend Wärme transportierendes Grauwasser, beispielsweise ein warmes Duschabwasser, somit in die Wärmerückgewinnungsanlage geleitet, während kaltes Grauwasser bei dann geöffnetem Abflusssperrventil 13 ohne Durchfluss der Wärmerückgewinnungsanlage über die zweite Abführungsleitung 5 beispielsweise in das Kanalnetz abgeleitet wird, wodurch eine Spülung der zweiten Abführungsleitung 5 erfolgt.

Die zweite Abführungsleitung 5 geht vertikal verlaufend vom Trenngehäuse 2 aus. Der vertikale Verlauf setzt sich bis zu einer in die zweite Abführungsleitung 5 mündenden Spülleitung fortsetzt, welche von dem in die zweite Abführungsleitung 5 mündenden Zweig 42 der ersten Abführungsleitung 4 gebildet wird. Das Abflusssperrventil 13 wird in einer Anlage, in der nie kaltes Abwasser abgeleitet wird, von Zeit zu Zeit geöffnet um die zweite Abführungsleitung 5 mit warmem Grauwasser zu spülen.

Die Stäbe 7, 70 sind vorzugsweise aus Edelstahl gebildet. Sie sind vorzugsweise 4 bis 6 mm dick und 20 bis 50 cm lang. Ihr Normalabstand beträgt vorzugsweise 5 bis 9 mm.

Modifizierte Ausbildungen der Trennvorrichtung sind denkbar und möglich, ohne den Bereich der Erfindung zu verlassen. Beispielsweise könnten die Zuführungszuordnungen der Zweige 41, 42 auch umgekehrt sein. Bei einer solchen Ausbildung müsste der Temperatursensor 12 das im dann mit der Wärmerückgewinnunganlage verbundenen Zweig 42 angeordnete Abflusssperrventil 13 bei Überschreiten einer einstellbaren Öffnungstemperatur öffnen und bei Unterschreiten derselben schließen. Das Abflusssperrventil könnte jedoch auch ohne Umkehr der Zuführungszuordnungen der Zweige 41, 42 im ersten Zweig 41 bei sonst gleichen Öffnungsbedingungen wie vorgehend beschrieben angeordnet sein.

Es ist auch denkbar und möglich, dass das Abflusssperrventil 13 in einer unverzweigten ersten Abführungsleitung 4 angeordnet ist, welche zur Wärmerückgewinnungsanlage führt. Bei einer solchen Ausbildung wird das Abflusssperrventil 13 immer dann geschlossen, wenn die Abwassertemperatur eine einstellbare Schließtemperatur unterschreitet. Das kalte Grauwasser wird bei einer solchen Ausbildung zum Spülen der zweiten Abführungsleitung 5 verwendet.

Weiters ist es denkbar und möglich, dass die Stäbe 7 des Rechens 6 direkt mit dem Zuflussrohr 9 verbunden sind. Sie könnten beispielsweise an die Außenwandung 10 des Zuflussrohres 9 angeschweißt oder angeklebt sein. Auch eine einstückige Ausbildung des trenngehäuseseitigen Endabschnittes des Zuflussrohres 9 und des Rechens 6 bzw. der Stäbe 7 des Rechens ist denkbar und möglich. Die Stäbe 7 könnten auch - insbesondere bei einer nicht in das Trenngehäuse 2 hineinragenden Zuführungsleitung 3 - mit einer Zuführungsleitungsseitigen Seitenwand des Trenngehäuses 2 verbunden bzw. an dieser befestigt sein.

Es könnten auch mehr als zwei Abführungsleitungen für die Feststoff-Abführung vorhanden sein. Beispielsweise könnte eine dritte Abführungsleitung vorhanden sein, die zwischen der ersten Abführungsleitung 4 und der zweiten Abführungsleitung 5 angeordnet ist und von den Stäben 7 ebenfalls überragt wird. In Verbindung mit einer solchen Ausbildung der Trennvorrichtung 1 könnte der Abstand der Stäbe über der dritten Abführungsleitung größer als über der ersten Abführungsleitung ausgeführt sein. Auf diese Weise könnte gleichzeitig zur wirksamen Trennung der Feststoffe und des Grauwassers eine weitergehende Klassierung/Sortierung/Stratifizierung der Feststoffe ihrer Größe nach einfach erreicht werden.

Erfindungsgemäße Trennvorrichtungen werden insbesondere in Haushalten, Betrieben oder Kommunen zur Wärmerückgewinnung aus dem Abwasser eingesetzt. Haushalts- und Industrieabwässer transportieren häufig große Mengen an Wärmeenergie. Die beschriebene Trennvorrichtung eignet sich daher als Mittel zur Energieeinsparung. Dies umso mehr als insbesondere bereits bestehende Abwasseranlagen wie z.B. Hotelabwasseranlagen, Industrieabwasseranlagen etc. einfach und ohne große Kosten mit der Trennvorrichtung nachgerüstet werden können.

### Legende zu den Hinweisziffern:

- 1: Trennvorrichtung
- 2: Trenngehäuse, Trennrohr
- 3: Zuführungsleitung
- 30: Mündung
- 4: Abführungsleitung
- 40: Eintrittsöffnung
- 41: Zweig
- 42: Zweig
- 5: Abführungsleitung
- 50: Eintrittsöffnung
- 6: Rechen
- 7: Stäbe

- 70: verlängerte Stäbe
- 8: Verschluss
- 9: Zuflussrohr
- 10: Außenwandung
- 11: Unterseite
- 12: Temperatursensor
- 13: Abflusssperrventil
- 14: Halteteil
- 100: Innenwandung

## Patentansprüche

1. Trennvorrichtung zur Trennung von Feststoffen aus Abwasser mit einem Trenngehäuse (2) mit einer Zuführungsleitung (3) zur Zufuhr des mit den Feststoffen befrachteten Abwassers, einer ersten Abführungsleitung (4) zur Abführung des von den Feststoffen gereinigten Abwassers, einer zweiten Abführungsleitung (5) zur Abführung der abgetrennten Feststoffe und einem im Trenngehäuse (2) angeordneten Rechen (6) zur Abtrennung der Feststoffe aus dem Abwasser, der geneigt angeordnet ist und sich über die Eintrittsöffnung (40) der ersten Abführungsleitung (4) erstreckt und auf dessen Oberseite die Zufuhr des Abwassers erfolgt, wobei über die Oberseite des Rechens (6) abgleitende Feststoffe von dessen unterem Rand in die zweite Abführungsleitung (5) gelangen, **dadurch gekennzeichnet, dass** die zweite Abführungsleitung (5) vertikal verlaufend vom Trenngehäuse (2) ausgeht und über die Oberfläche des Rechens (6) abgeleitete Feststoffe von dessen unterem Rand in die Eintrittsöffnung (50) der zweiten Abführungsleitung (5) fallen und der vertikale Verlauf der zweiten Abführungsleitung (5) sich zumindest bis zu einer in die zweite Abführungsleitung (5) mündenden Spülleitung fortsetzt.

2. Trennvorrichtung nach Anspruch 1, **dadurch gekennzeichnet, dass** das Trenngehäuse (2) ein geneigt angeordnetes Rohr ist, wobei der von der Horizontalebene und dem Rohr eingeschlossene spitze Neigungswinkel vorzugsweise zwischen 25° und 75° liegt.

3. Trennvorrichtung nach Anspruch 2, **dadurch gekennzeichnet, dass** die Zuführungsleitung (3) wie an sich bekannt exzentrisch mit dem oberen Ende des Trenngehäuses (2) verbunden ist, wobei die Längsmittelachse der Zuführungsleitung (3) gegenüber der Längsmittelachse des Trenngehäuses (2) nach oben verschoben ist.

4. Trennvorrichtung nach einem der Ansprüche 1 bis 3, **dadurch gekennzeichnet, dass** die erste Abführungsleitung (4) und die zweite Abführungsleitung (5) an der geneigten Unterseite (11) des Trenngehäuses (2) angeordnet sind.

5. Trennvorrichtung nach einem der Ansprüche 1 bis 4, **dadurch gekennzeichnet, dass** die Zuführungsleitung (3) wie an sich bekannt in das Trenngehäuse (2) hineinragt.

6. Trennvorrichtung nach einem der Ansprüche 1 bis 5, **dadurch gekennzeichnet, dass** die Mündung (30) der Zuführungsleitung (3) wie an sich bekannt oberhalb des Rechens (6) liegt, vorzugsweise im Bereich seines oberen Endes.

7. Trennvorrichtung nach einem der Ansprüche 1 bis 6, **dadurch gekennzeichnet, dass** der Rechen (6) wie an sich bekannt von mehreren zueinander beabstandeten Stäben (7) gebildet wird, wobei die Stäbe (7) parallel zur Richtung des Gefälles des Rechens (6) liegen.

8. Trennvorrichtung nach einem der Ansprüche 1 bis 7, **dadurch gekennzeichnet, dass** zumindest einige der Stäbe (7) zu einem Bereich im Trenngehäuse (2) hin gerichtet sind, der sich bezogen auf die Vertikale oberhalb der Eintrittsöffnung (50) der zweiten Abführungsleitung (5) befindet.

9. Trennvorrichtung nach einem der Ansprüche 7 oder 8, **dadurch gekennzeichnet, dass** die der zweiten Abführungsleitung (5) näheren Endabschnitte zumindest einiger Stäbe (7) frei ragend ausgebildet sind.

10. Trennvorrichtung nach einem der Ansprüche 7 bis 9, **dadurch gekennzeichnet, dass** die Stäbe (7) wie an sich bekannt bezogen auf einen Querschnitt durch das Trenngehäuse (2) entlang der Querschnittskontur einer Rinne angeordnet sind.

11. Trennvorrichtung nach einem der Ansprüche 7 bis 10, **dadurch gekennzeichnet, dass** die der Zuführungsleitung (3) näheren Endabschnitte der Stäbe (7) von einem Halteteil (14) gehalten sind.

12. Trennvorrichtung nach einem der vorstehenden Ansprüche, **dadurch gekennzeichnet, dass** das Trenngehäuse (2) einen wie an sich bekannten öffenbaren Verschluss (8) aufweist, an dem mindestens ein bis zum Verschluss (8) hin verlängerter Stab (70) des Rechens (6) festgemacht ist.

13. Trennvorrichtung nach Anspruch 11 oder 12, **dadurch gekennzeichnet, dass** das Halteteil (14) auf die Außenwandung (10) der Zuführungsleitung (3) in Umfangsrichtung formschlüssig aufgesteckt und/oder zwischen der Außenwandung (10) der Zuführungsleitung (3) und der Innenwandung (100) des Trenngehäuses (2) eingesteckt ist.

14. Trennvorrichtung nach einem der vorstehenden Ansprüche, **dadurch gekennzeichnet, dass** in der Zuführungsleitung (3) ein Temperatursensor (12) zur Erfassung der Abwassertemperatur angeordnet ist.

15. Trennvorrichtung nach Anspruch 14, **dadurch gekennzeichnet, dass** der Temperatursensor (12) ein in der ersten Abführungsleitung (4) angeordnetes Abflusssperrventil (13) in Abhängigkeit von der Abwassertemperatur öffnet und/oder schließt.

16. Trennvorrichtung nach Anspruch 15, **dadurch gekennzeichnet, dass** die erste Abführungsleitung (4) eine Gabelung in einen ersten Zweig (41) und in einen zweiten Zweig (42) aufweist, wobei das Abflusssperrventil (13) entweder im ersten Zweig (41) oder im zweiten Zweig (42) angeordnet ist und einer der beiden Zweige (41, 42) in die zweite Abführungsleitung (5) mündet.

17. Trennvorrichtung nach Anspruch 16, **dadurch gekennzeichnet, dass** die Spülleitung von dem in die zweite Abführungsleitung (5) mündenden Zweig (42) der ersten Abführungsleitung (4) gebildet wird.

18. Trennvorrichtung nach einem der Ansprüche 1 bis 17, **dadurch gekennzeichnet, dass** der spitze Neigungswinkel α des Rechens (6) betragsmäßig zwischen 25° und 75° liegt, vorzugsweise zwischen 35° und 60°.
